# EUROPEAN PATENT SPECIFICATION

(11) **EP 1 982 872 B1**
(45) Date of publication and mention of the grant of the patent: **26.10.2011**
(21) Application number: 08152932.3
(22) Date of filing: 18.03.2008
(51) Int. Cl.: B60R 21/34, B60R 21/237

(54) **Airbag folding method, airbag accommodating method, and airbag apparatus**
Airbagfaltverfahren, Airbagaufbewahrungsverfahren und Airbagvorrichtung
Procédé de pliage d'airbag, procédé d'agencement d'airbag, et appareil d'airbag

(30) Priority: 18.04.2007 JP 2007108779
(43) Date of publication of application: 22.10.2008
(73) Proprietor: TAKATA CORPORATION, Minato-ku, Tokyo 106-8510 (JP)
(72) Inventor: Nakamura, Atsushi, Tokyo 106-8510 (JP); Kobayashi, Yoshihiro, Tokyo 106-8510 (JP)
(74) Representative: Vossius & Partner

(56) References cited:
- EP-A- 0 940 301
- EP-A- 2 127 961
- ANONYMOUS: "Air bag fold and method" RESEARCH DISCLOSURE, MASON PUBLICATIONS, HAMPSHIRE, GB, vol. 437, no. 52, 1 September 2000 (2000-09-01), XP007126790 ISSN: 0374-4353

## Description

The present invention relates to an airbag folding method, an airbag accommodating method, and an airbag apparatus mounted on a vehicle, such as an automobile, and in particular it relates to an airbag folding method, an airbag accommodating method, and an airbag apparatus suitable for an airbag having a body connected to an inflator and a protrusion protruded from the body part in a predetermined direction.

On a vehicle, such as an automobile, an airbag apparatus has been generally mounted for absorbing an impact applied to an occupant during a collision by inflating and developing an airbag in a vehicle cabin. Also, an airbag apparatus for absorbing an impact applied to a pedestrian by inflating and developing an airbag along the surface of a vehicle has been discussed about its practical application. Such airbag apparatuses include various types, such as a driver seat airbag apparatus inwardly packed in a steering wheel, a passenger seat airbag apparatus inwardly packed in an instrument panel, a side airbag apparatus inwardly packed in a vehicle side wall or a seat, a curtain airbag apparatus inwardly packed in an upper part of a door, and a pedestrian airbag apparatus inwardly packed under a hood, which are adopted or developed. These airbag apparatuses generally include an inflator configured to generate gas under a predetermined condition, an airbag connected to the inflator, and a retainer for accommodating the airbag therein. The shape of the airbag is herein designed in accordance with the airbag apparatus kind and the vehicle type, so that there are various airbag-apparatus shapes. Among them, there is an airbag having a body connected to the inflator and a projection protruded from the body in a predetermined direction. An airbag apparatus using an airbag with such a shape may include the pedestrian airbag apparatus, for example.

The pedestrian airbag apparatus is an airbag apparatus for absorbing an impact applied to a pedestrian or a bicycle occupant (referred to a pedestrian, etc., below) when a vehicle, such as an automobile, collides with a pedestrian or a bicycle so that the pedestrian, etc., is collided with a vehicle pillar (a column connecting a body to a roof). The vehicle pillar is a member for ensuring a space during a vehicle collision or vehicle rolling sideways since this member is generally harder than other members. The pillar is classified into an A-pillar (or a front pillar) arranged on the front side of the vehicle, a B-pillar (or a center pillar) arranged between a front seat and a rear seat, and a C-pillar (or a rear pillar) arranged on the rear side. Among them, an airbag apparatus for covering the A-pillar has been known as described in Patent Documents 1 to 3.

The pedestrian airbag apparatus described in Patent Documents 1 to 3 is an airbag apparatus for inflating and developing an airbag along the surface of the vehicle when a collision of a vehicle with a pedestrian, etc., is detected or foreknown. The airbag includes a body to be inflated and developed along the lower part surface of the front window glass of the vehicle and a pair of pillar covering parts (also referred to rearward development parts or longitudinally inflating parts) to be inflated and developed along A-pillars of the vehicle from both ends of the body.

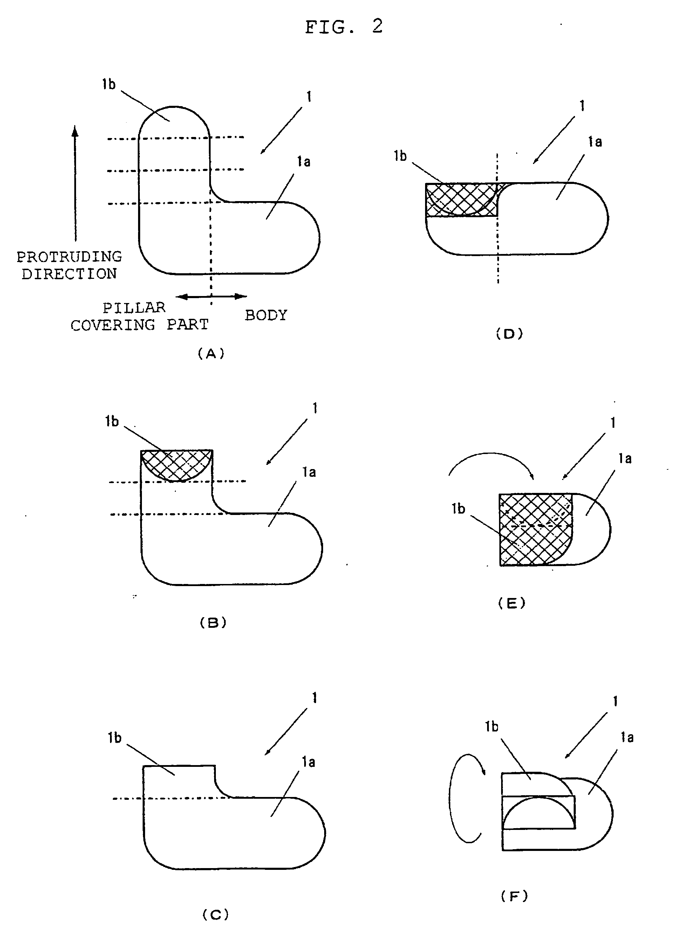

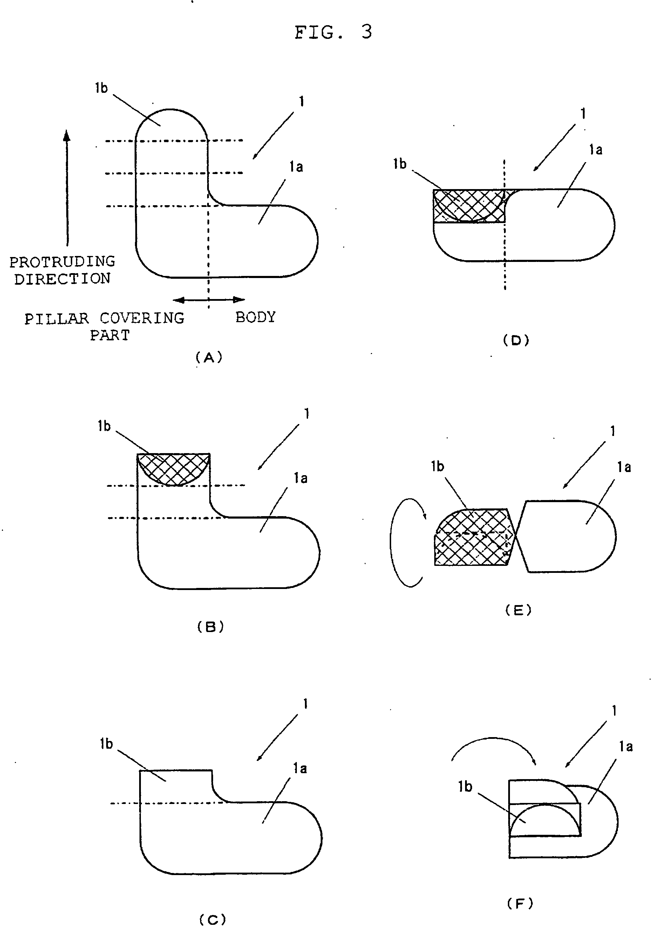

Since the pillar covering part is to be inflated and developed along the A-pillar of the vehicle, as described in Fig. 2 of Patent Document 1 , Fig. 12 of Patent Document 2, and Fig. 3 of Patent Document 3, the pillar covering part is generally accommodated in a retainer by being roll-folded.
[Patent Document 1] Japanese Unexamined Patent Application Publication No. 2005-350028, Fig. 2
[Patent Document 2] Japanese Unexamined Patent Application Publication No. 2006-256447, Fig. 12
[Patent Document 3] Japanese Unexamined Patent Application Publication No. 2007-30644, Fig. 3

Document 2 describes an airbag folding method for folding an airbag having a body connected to an inflator for generating gas under a predetermined condition and a projection projected from the body in a predetermined direction, the airbag folding method comprising the steps of:
bellows-folding or inside-folding the projection along a projecting direction;
unfolding the folded projection over the body;

However, when the pillar covering part is roll-folded as described in Patent Documents 1 to 3, although the roll-folding the pillar covering part is convenient for an airbag to be inflated and developed along the pillar, there has been a problem that the airbag cannot be folded smaller in comparison with the bellows-folding and the inside-folding adopted generally, so that the accommodating efficiency is inferior. As a result, the retainer for accommodating the airbag therein must be also large, so that it has been difficult to respond to a demand from the vehicle toward compactness as small as possible. These problems are not specific to the pedestrian airbag apparatus but are common to an airbag having a body connected to the inflator and a projection protruded from the body in a predetermined direction.

The present invention has been made in view of the problems described above, and it is an object thereof to provide an airbag folding method, an airbag accommodating method, and an airbag apparatus capable of folding an airbag small so as to improve the accommodating efficiency and to reduce the airbag apparatus in size.

According to the present invention, in an airbag folding method for folding an airbag having a body connected to an inflator for generating gas under a predetermined condition and a projection projected from the body in a predetermined direction, there is provided the airbag folding method that includes the steps of bellows-folding or inside-folding the projection along a projecting direction; upfolding the folded projection over the body; and twisting the upfolded projection by rotating it in the projecting direction. More specifically, in the twisting step, when the folded projection is upfolded over the body, the folded projection is rotated in the protruding direction so that the surface exposed on the front face is approximated on the body toward the bottom surface of a retainer. In addition, the airbag may be a pedestrian airbag configured so that the body is inflated and developed over a hood of a vehicle and the projection is inflated and developed along a pillar of the vehicle, for example.

Also, according to the present invention, in an airbag accommodating method for accommodating an airbag within a predetermined retainer, the airbag having a body connected to an inflator for generating gas under a predetermined condition and a projection projected from the body in a predetermined direction, there is provided the airbag accommodating method that includes the steps of bellows-folding or inside-folding the projection along a projecting direction; upfolding the folded projection over the body; twisting the upfolded projection by rotating it in the projecting direction; and shaping the folded airbag by upfolding the residual part protruded from the retainer to be accommodated to the shape of an opening of the retainer. The airbag accommodating method may also further include the steps of attaching a protector cloth in the retainer before folding the airbag; and wrapping the shaped airbag with the protector cloth. Also, more specifically, in the twisting step, when the folded projection is upfolded over the body, the folded projection is rotated in the protruding direction so that the surface exposed on the front face is approximated on the body toward the bottom surface of the retainer. In addition, the airbag may be a pedestrian airbag configured so that the body is inflated and developed over a hood of a vehicle and the projection is inflated and developed along a pillar of the vehicle, for example.

Furthermore, according to the present invention, there is provided an airbag apparatus that includes an airbag including an inflator for generating gas under a predetermined condition, a body connected to the inflator, and a projection projected from the body in a predetermined direction; and a retainer for accommodating the airbag therein, in which the projection is bellows-folded or inside-folded along a projecting direction; the folded projection is upfolded over the body; and the upfolded projection is twisted by rotating it in the projecting direction so as to accommodate the twisted airbag within the retainer. Also, the airbag apparatus may also further include a protector cloth for wrapping the airbag accommodated in the retainer. More specifically, when the folded projection is upfolded over the body, the projection is twisted by being rotated in the protruding direction so that the surface exposed on the front face is approximated on the body toward the bottom surface of the retainer. In addition, the airbag may be a pedestrian airbag configured so that the body is inflated and developed over a hood of a vehicle and the projection is inflated and developed along a pillar of the vehicle, for example.

According to the airbag folding method, the airbag accommodating method, and the airbag apparatus of the present invention described above, by bellows-folding or inside-folding the projection of the airbag, the whole airbag can be folded small, improving the accommodating efficiency. Hence, the retainer can be reduced in size, so that the whole airbag apparatus can become more compact. Also, by twisting the upfolded projection by rotating it in the projecting direction, using the restorative force generated during inflating and developing, the projection can be rapidly inflated and developed along vehicle structures, suppressing the floppy airbag. Also, by wrapping the airbag with a protector cloth during accommodating the airbag, a friction generated between the airbag and the retainer during the inflating of the airbag can be reduced.

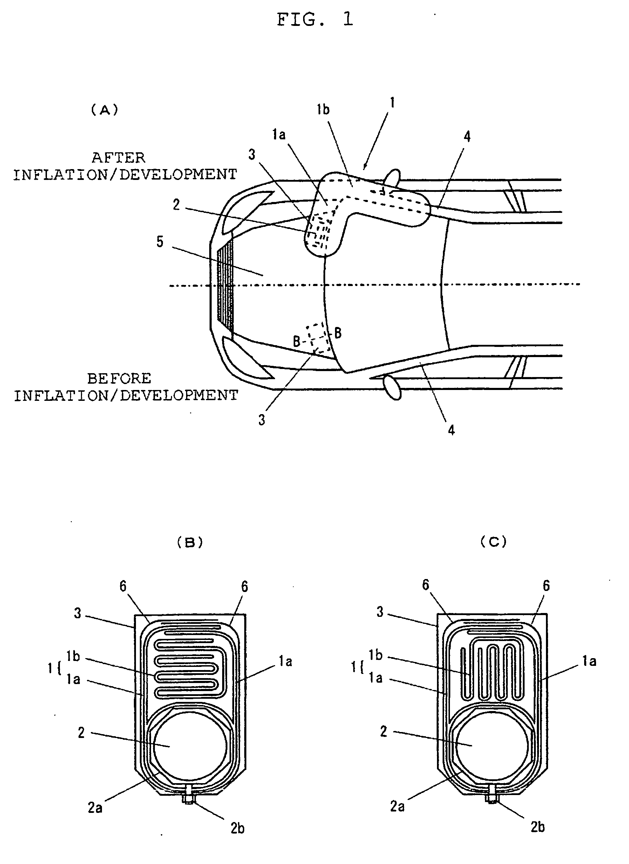

Embodiments according to the present invention will be described bellow with reference to Figs. 1 to 5.
[Fig. 1] Fig. 1 includes drawings showing an airbag apparatus according to the present invention, wherein Fig. 1(A) is an arrangement drawing of on-vehicle units; Fig. 1(B) is a sectional view (a sectional view at the line B-B of Fig. 1(A)); and Fig. 1(C) is a sectional view of an airbag apparatus according to another embodiment.
[Fig. 2] Fig. 2 includes drawings showing a folding method of the airbag according to a first embodiment, wherein Fig. 2(A) is a development drawing of the airbag; Figs. 2(B) to 2(D) show the folding process of a pillar covering part; Fig. 2(E) shows the upfolding process; and Fig. 2(F) shows the twisting process.
[Fig. 3] Fig. 3 includes drawings showing an airbag folding method according to a second embodiment, wherein Fig. 3(A) is a development drawing of the airbag; Figs. 3(B) to 3(D) show the folding process of the pillar covering part; Fig. 3(E) shows a twisting process; and Fig. 3(F) shows an upfolding process.

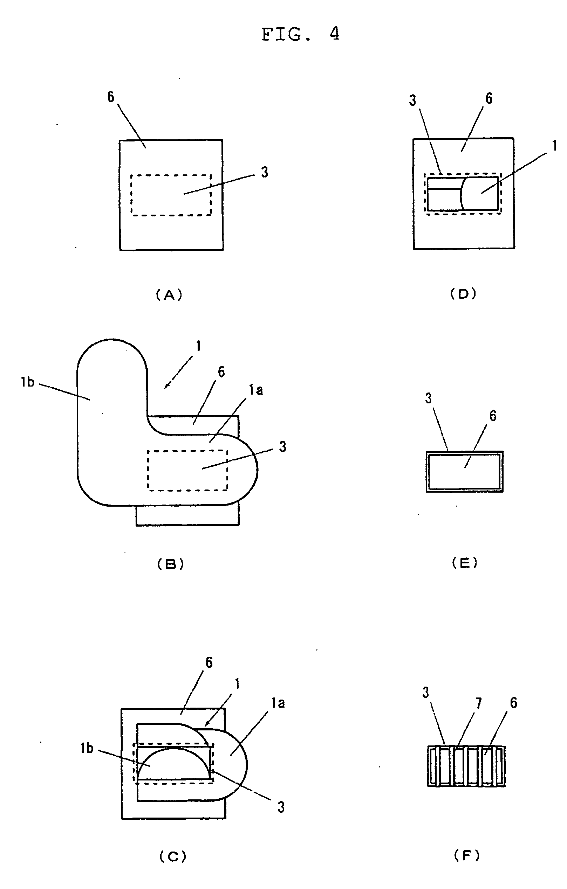

[Fig. 4] Fig. 4 includes drawings showing an airbag accommodating method, wherein Fig. 4(A) shows a protector-cloth attaching process; Fig. 4(B) an airbag attaching process; Fig. 4(C) an airbag folding process; Fig. 4(D) an airbag shaping process; Fig. 4(E) an airbag covering process; and Fig. 4(F) an airbag restricting process.

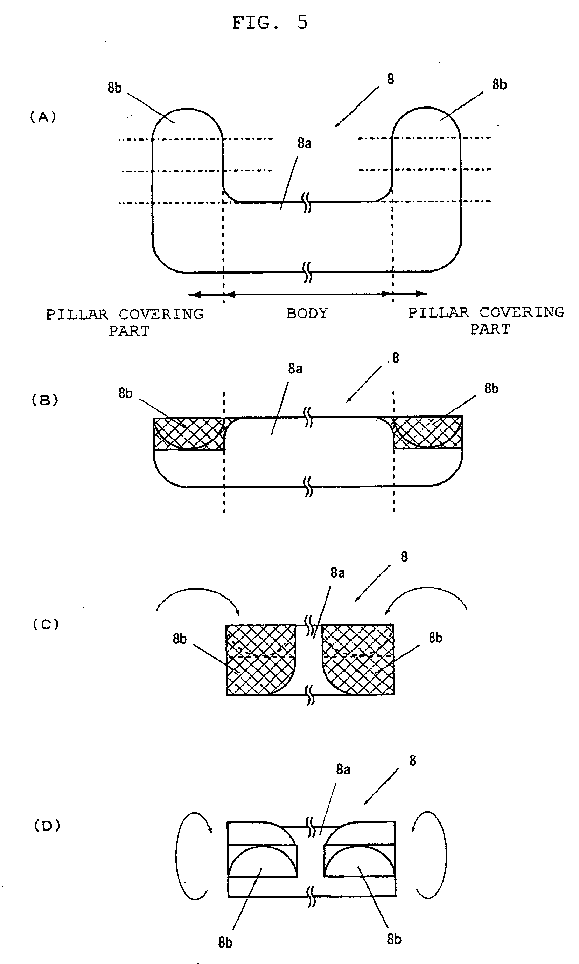

[Fig. 5] Fig. 5 includes drawings showing a folding method of a roughly concave-shaped airbag 8, wherein Fig. 5(A) is a development drawing of the airbag; Fig. 5(B) shows the folding process of the pillar covering part; Fig. 5(C) shows the upfolding process; and Fig. 5(D) shows the twisting process.
   Fig. 1 herein includes drawings showing an airbag apparatus according to the present invention, wherein Fig. 1(A) is an arrangement drawing of on-vehicle units; Fig. 1(B) is a sectional view (a sectional view at the line B-B of Fig. 1(A)); and Fig. 1(C) is a sectional view of an airbag apparatus according to another embodiment. In Fig. 1(A), the upper part from the chain line shows a state of the airbag after being inflated and developed while the lower part that before being inflated and developed.

The airbag apparatus according to the present invention and shown in Fig. 1 includes an airbag 1 to be inflated and developed along the surface of a vehicle when an ECU (electronic control unit) mounted on the vehicle detects or foresees a collision of the vehicle with a pedestrian, etc., an inflator 2 for supplying gas to the airbag 1, and a retainer 3 for accommodating the airbag 1 and the inflator 2 therein. The airbag 1 includes a body 1a to be bulged along the surface of the vehicle and a pillar covering part 1b to be inflated and developed along a pillar 4 of the vehicle by protruding from the body 1a. The pillar covering part 1b, as shown in Fig. 1(B) or Fig. 1(C), is bellows-folded along a protruding direction (inflating and developing direction); the folded pillar covering part 1b is upfolded over the body 1a; and the upfolded pillar covering part 1b is folded and accommodated in the retainer 3 in a state that it is twisted by being rotated in the protruding direction. More specifically, in the pillar covering part 1b that is a projection, when the folded pillar covering part 1b is upfolded over the body 1a, the surface exposed on the front is approximated toward the bottom surface of the retainer 3 and is twisted by being rotated in the protruding direction (inflating and developing direction).

The airbag apparatus is for the A pillar, and as shown in Fig. 1(A), the apparatuses are arranged at two right and left positions inside a front hood 5 so as to cover each of pillars 4 (A pillars) arranged on both sides of the vehicle with the airbag 1 of each airbag apparatus.

The airbag 1, as shown in Fig. 1(A), is folded and accommodated within the retainer 3 before the inflation and development, and after the inflation and development, it is inflated to roughly have an L-shape and to cover the pillar 4. Such an airbag 1 is a so-called pedestrian airbag so as to alleviate an impact during a collision of the vehicle with a pedestrian, etc., by covering the pillar 4, which is harder than other parts. Hence, the airbag 1 has to smoothly cover the pillar 4. On the other hand, the arrangement space for the airbag apparatus may not be sufficiently ensured, so that it is necessary to save a space. Then, the present invention solves these problems by contriving a folding method of the airbag 1. Such a folding method will be described later; whereas, according to the embodiment shown in Fig. 1(B), the folded pillar covering part 1b is rotated by 1/2 revolutions (by 180°) in the protruding direction (inflating and developing direction), and is upfolded on the body 1a. Also, according to another embodiment show in Fig. 1(C), the folded pillar covering part 1b is rotated by 1/4 revolutions (by 90°) in the protruding direction (inflating and developing direction), and is upfolded over the body 1a. Furthermore, when the airbag 1 is accommodated in the retainer 3, as shown in Figs. 1(B) and 1(C), the airbag 1 may also be wrapped with a protector cloth 6. Providing the protector cloth 6 may reduce the friction between the retainer 3 and the airbag 1 during the inflating and developing of the airbag 1. The protector cloth 6 may be formed of the same base cloth as that of the airbag 1, for example.

The inflator 2 is roughly formed in a cylindrical shape, and is accommodated in a case 2a made of a metal or a resin, so that it is accommodated in the retainer 3 in a housed state within the airbag 1. The case 2a is fixed to the retainer 3 with fastening gadgets 2b such as bolts and nuts. The inflator 2 is also connected to the ECU (not shown), so that it is ignited by an ignition electric current from the ECU so as to generate gas by burning a chemical agent contained within the inflator 2 and to supply the gas to the airbag 1. The inflator 2 may also be externally attached to the retainer 3.

The retainer 3, as shown in Figs. 1(B) and 1(C), includes a space for accommodating the airbag 1 and the inflator 2 and a shape opened on the top, and the opened part is wholly or partially blocked off with constraint gadgets (not shown), such as a lid and a strap. The retainer 3 having the airbag 1 and the inflator 2 accommodated therein is fixed on the back of an opening formed in the front hood 5 with bolts, etc., for example. The shape of the retainer 3 must be designed appropriately in accordance with the type of vehicle, etc., so that it is not limited to the shape shown in the drawings. For example, in order to let the airbag 1 easily inflate and develop toward the rear of the vehicle, a guide part extended or inclined rearward may also be formed on an end face of the retainer 3 in the front-back direction of the vehicle.

Then, the folding method of the airbag 1 shown in Fig. 1(B) will be described with reference to Figs. 2 and 3. Fig. 2 herein includes drawings showing a folding method of the airbag according to a first embodiment, in which Fig. 2(A) is a development drawing of the airbag; Figs. 2(B) to 2(D) show the folding process of the pillar covering part; Fig. 2(E) shows the upfolding process; and Fig. 2(F) shows the twisting process. For description convenience sake, the front face of the airbag 1 is designated to be the surface touching at a pedestrian, etc., and the rear face is designated to be the surface facing the vehicle body, where is hatched.

The airbag development drawing shown in Fig. 2(A) shows the state of the airbag 1 before being folded, in which the airbag 1 is placed on a plane with the front face up. As shown in Fig. 2(A), the right side part of the broken line (the crossbar part of the rough L-shape) is the body 1a while left side part thereof (the lengthwise bar part thereof) is the pillar covering part 1b. That is, in the airbag 1, the pillar covering part 1b is linked to the body 1a to protrude at substantially the right angle from an end of the body 1a. In the airbag 1, at first, the pillar covering part 1b is bellows-folded across the chain lines along the protruding direction. In addition, the sizes of the body 1a and the pillar covering part 1b must be appropriately designed in accordance with the type of the vehicle, so that they are not limited to the shapes of the drawings.

The pillar covering part folding process of Figs. 2(B) to 2(D) is a bellows-folding process of the pillar covering part 1b. As shown in Fig. 2(B), first, an end portion of the pillar covering part 1b is inward folded. The drawing herein shows that the pillar covering part 1b is folded toward the front face of the drawing. Hence, the rear face of the airbag appears on the top. Then, as shown in Fig. 2(C), the folded part is further folded inward. At this time, the folded part is folded oppositely (to the rear face of the drawing) to the side folded in Fig. 2(B) (the front face of the drawing). Then, as shown in Fig. 2(D), the folded part is further folded inward. At this time, the folded part is folded oppositely (to the front face of the drawing) to the side folded in Fig. 2(C) (the rear face of the drawing). Hence, the rear face of the airbag again appears on the top. By such a pillar covering part folding process, the pillar covering part 1b is triple bellows-folded. By bellows-folding the pillar covering part 1b in such a manner, it can be folded smaller in comparison with the roll-folding, improving the accommodating efficiency. Also, since the folded state of the bellows-folding is liable to be canceled easier than the roll-folding during the inflation and developing, the pillar covering part 1b can be faster inflated and developed. In addition, the number of foldings is not limited to three of the drawings, so that it may be appropriately changed under conditions such as the size of the pillar covering part 1b and the capacity for the airbag 1 of the retainer 3.

The upfolding process of Fig. 2(E) is upfolding over the body 1a of the pillar covering part 1b folded by the pillar covering part folding process. Specifically, the pillar covering part 1b is upfolded over the body 1a at the chain line shown in Fig. 2(D). According to the embodiment, the pillar covering part 1b is upfolded at the boundary between the body 1a and the pillar covering part 1b; alternatively, it may also be upfolded at a position deviated therefrom in accordance with the sizes of the airbag 1 and the retainer 3. By upfolding the pillar covering part 1b over the body 1a in such a manner, the width of the airbag 1 can be reduced.

The twisting process of Fig. 2(F) is a process that twists the pillar covering part 1b upfolded in the upfolding process by rotating it in the protruding direction to be upside down. Specifically, after the upfolding process of Fig. 2(E), the airbag 1 has been upfolded over the body 1a so that the bellows-folded part of the pillar covering part 1b is sandwiched; and then, the airbag 1 is twisted by arranging the bellows-folded part with the front face up. That is, the rear face, which has been exposed on the front face of the drawing, of the bellows-folded part of the pillar covering part 1b is rotated by 1/2 revolutions (by 180°) so as to approach the bottom of the retainer 3 on the body 1a. If the end portion of the pillar covering part 1b is folded in a direction opposite to the folding direction of Fig. 2(B) (to the rear face of the drawing), the bellows-folded part would have been already arranged with the front face up in Fig. 2(E); in this case, the airbag 1 may be twisted toward the bottom of the retainer 3 on the body 1a so that the bellows-folded part is sandwiched. This is the same as when the number of times of the beliows-folding is even numbered. In such a manner, by twisting the folded pillar covering part 1b to rotate it in the protruding direction, a restorative force can be generated for restoring the twisted part during the inflating and developing of the airbag 1. Using the restorative force, the bellows-folded pillar covering part 1b may be inflated and developed along the pillar 4. A case has been herein described in that the bellows-folded pillar covering part 1b is rotated by 1/2 revolutions (by 180°); alternatively, as shown in Fig. 1(C), it may also be rotated by 1/4 revolutions (by 90°) or by one revolution (by 360°). The number of revolutions and the rotational angle may be optionally established in accordance with the kind and the shape of the airbag 1. However, for effectively generating the restorative force of the twisting, it is preferable to be roughly established in a range from 1/4 revolutions (90°) to one revolution (360°), and more preferably, in 1/2 revolutions (180°) in view of the accommodating efficiency of the airbag 1.

According to the folding method for the airbag 1 of the present invention described above, the bellows-folding is adopted to the pillar covering part 1b as well as the twisting is added to the upfolding, so that the folding method satisfying both the improvement in accommodating efficiency of the airbag 1 and the direction control during the inflating and developing can be achieved. Although not shown, in the folding process of the pillar covering part shown in Figs. 2(B) to 2(D), instead of the bellows-folding, an inside-folding may be adopted. The inside-folding is herein defined as a method in that the front-face base cloth and the rear-face base cloth of the airbag 1 in Fig. 2(A) are respectively bellows-folded. Although, the inside-folding is rather troublesome in comparison with the bellows-folding, the airbag 1 can be folded small in the same way as in the bellows-folding as well as the folding may be liable to be cancelled further easily than the bellows-folding.

Then, a folding method according to a second embodiment shown in Fig. 1(B) will be described. Fig. 3 includes drawings showing the airbag folding method according to the second embodiment, in which Fig. 3(A) is a development drawing of the airbag; Figs. 3(B) to 3(D) show the folding process of the pillar covering part; Fig. 3(E) shows the twisting process; and Fig. 3(F) shows the upfolding process. Since the process shown in Figs. 3(A) to 3(D) is the same as that of Figs. 2(A) to 2(D) according to the first embodiment shown in Fig. 2, the detailed description is omitted.

According to the second embodiment shown in Fig. 3, the upfolding process of Fig. 2(E) and the twisting process of Fig. 2(F) in the first embodiment shown in Fig. 2 are counterchanged in order. Namely, the bellows-folded pillar covering part 1b is twisted by rotating it in the protruding direction with up side down before it is upfolded over the body 1a. In Fig. 3(E), the bellows-folded part is rotated toward the pillar 4 to arrange the bellows-folded part on the rear face of the drawing. Then, as shown in Fig. 3(F), the twisted pillar covering part 1b is upfolded over the body 1a. When the upfolding process and the twisting process are counterchanged in order, in such a manner, the airbag 1 can be folded in the same way as in the first embodiment. According to the first and second embodiments described above, the upfolding process and the twisting process have been described in distinction from each other, in convenience sake; however, they may also be executed substantially simultaneously when the airbag 1 is folded in practice.

Then, the accommodating method of the airbag 1 shown in Fig. 1(B) will be described with reference to Fig. 4. Fig. 4 includes drawings showing the airbag accommodating method, in which Fig. 4(A) shows a protector-cloth attaching process; Fig. 4(B) an airbag attaching process; Fig. 4(C) an airbag folding process; Fig. 4(D) an airbag shaping process; Fig. 4(E) an airbag covering process; and Fig. 4(F) an airbag restricting process.

The protector-cloth attaching process of Fig. 4(A) is a process for fixing a protector cloth 6 on the internal surface of the retainer 3 by paving it thereon. Specifically, the protector cloth 6 is attached to the retainer 3 by retaining an opening formed in the protector cloth 6 in advance to a projection, such as a bolt for attaching the airbag, arranged in the retainer 3. When the protector cloth 6 is unnecessary like in a resin retainer 3, the process can be omitted.

The airbag attaching process of Fig. 4(B) is a process for fixing part of the inflator 2 in the airbag 1 having the inflator 2 mounted thereon to the retainer 3. Specifically, the inflator 2 is inserted into the case 2a shown in Fig. 1(B), and in a state that the inflator 2 and the case 2a are inserted in an inflator mounting part formed in the airbag 1, the inflator 2 and the case 2a are fitted into the retainer 3 by fixing them to the retainer 3 with the fastening gadgets 2b. The attaching method of the airbag 1 and the inflator 2 is not limited to that described above; alternatively, after the inflator 2 is fixed to the retainer 3, the airbag 1 may also be attached to the inflator 2.

The airbag folding process of Fig. 4(C) is a process for folding the airbag 1 according to the airbag folding method shown in Figs. 2 and 3. The detail thereof has been already described, so that the detailed description is omitted.

The airbag shaping process of Fig. 4(D) is a process for upfolding the residual part protruding from the retainer 3 to be accommodated to the shape of the opening of the retainer 3 when the folded airbag 1 protrudes from the retainer 3 as shown in Fig. 4(C). Specifically, in Fig. 4(D), the protruded part upward in the drawing is inside folded and then, the protruded part downward in the drawing is inward folded and finally, the protruded part on the right in the drawing is inward upfolded. If the protruded part cannot be accommodated in the retainer 3 with one time folding, the protruded part may be appropriately folded at several times.

The airbag covering process of Fig. 4(E) is a process for covering the airbag 1 with the protector cloth 6 after the airbag shaping process. The protector cloth 6 is for reducing the friction between the retainer 3 and the airbag 1 during the inflating and developing of the airbag 1, so that it may be arranged in no contact directly with the retainer 3 and the covering method is optional. When the protector cloth 6 is not used, this process is omitted.

The airbag restricting process of Fig. 4(F) is a process for restricting the airbag 1 accommodated in the retainer 3 from collapsing. Specifically, as shown in Fig. 4(F), the opening of the retainer 3 is partially covered with straps 7, for example. The strap 7 is formed of the base cloth made of the same material as that of the airbag 1 or a material liable to be cut rather than that. Instead of the straps 7, the opening may also be wholly covered with a lid member such as a lid.

According to the accommodating method of the airbag 1, since the folding method according to the present invention is incorporated to that of the airbag 1, the airbag 1 can be folded smaller so that the accommodating efficiency can be improved and the retainer 3 can be formed smaller. Hence, the entire airbag apparatus can be compactly formed.

Finally, a roughly concave-shaped airbag 8 according to the present invention capable of simultaneously covering the pillars 4 and 4 respectively arranged on both sides of a vehicle will be described with reference to Fig. 5. Fig. 5 includes drawings showing the folding method of the roughly concave-shaped airbag 8, in which Fig. 8(A) is a development drawing of the airbag; Fig. 8(B) shows the folding process of the pillar covering part; Fig. 8(C) shows the upfolding process; and Fig. 8(D) shows the twisting process. For description convenience sake, the front face of the airbag 1 is designated to be the surface touching at a pedestrian, etc., and the rear face is designated to be the surface facing the vehicle body, where is hatched.

The airbag development drawing shown in Fig. 5(A) shows the state of the airbag 8 before being folded, in which the airbag 8 is placed on a plane with the front face up. As shown in Fig. 5(A), the part located between the broken lines (the crossbar part of the rough concave-shape) is a body 8a while both-side parts thereof (two lengthwise bar parts thereof) are pillar covering parts 8b. That is, in the airbag 8, a pair of the pillar covering parts 8b is linked to the body 8a by substantially perpendicularly protruding from both ends of the body 8a. In the airbag 8, at first, each pillar covering part 8b is bellows-folded across the chain lines along the protruding direction.

The pillar covering part folding process of Fig. 5(B) shows the bellows-folding process of each pillar covering part 8b. First, an end portion of the pillar covering part 8b is inward folded. The pillar covering part 8b herein is folded toward the front face of the drawing. Then, the folded part is further folded inward. At this time, the folded part is folded oppositely (to the rear face of the drawing) to the side folded at the first time (the front face of the drawing). Then, the folded part is further folded inward. At this time, the folded part is folded oppositely (to the front face of the drawing) to the side folded at the second time (the rear face of the drawing) . By such folding, as shown in Fig. 5(B), each pillar covering part 8b is bellows-folded. By bellows-folding each pillar covering part 8b in such a manner, it can be folded smaller in comparison with the roll-folding, improving the accommodating efficiency. Also, since the folded state of the bellows-folding is liable to be canceled easier than the roll-folding during the inflation and developing, each pillar covering part 8b can be faster inflated and developed. In addition, the number of foldings is not limited to three of the drawings, so that it may be appropriately changed under conditions such as the size of the pillar covering part 8b and the capacity for the airbag 8 of the retainer (not shown). The detailed bellows-folding process is the same as that shown in Figs. 2(B) to 2(D), so that detailed drawings are herein omitted.

The upfolding process of Fig. 5(C) is upfolding over the body 8a of each pillar covering part 8b folded by the pillar covering part folding process. Specifically, each pillar covering part 8b is upfolded over the body 8a at the chain line shown in Fig. 5(B). Each pillar covering part 8b herein is upfolded at the boundary between the body 8a and each pillar covering part 8b; alternatively, it may also be upfolded at a position deviated therefrom in accordance with the sizes of the airbag 8 and the retainer. By upfolding each pillar covering part 8b over the body 8a in such a manner, the width of the airbag 8 can be reduced.

The twisting process of Fig. 5(D) is a process that twists each pillar covering part 8b upfolded in the upfolding process by rotating it in the protruding direction to be upside down. Specifically, after the upfolding process of Fig. 5(C), the airbag 8 has been upfolded over the body 8a so that the bellows-folded part of each pillar covering part 8b is sandwiched; and then, the airbag 8 is twisted by arranging the bellows-folded part with the front face up. That is, the rear face, which has been exposed on the front face of the drawing, of the bellows-folded part of each pillar covering part 8b is rotated by 1/2 revolutions (by 180°) so as to approach the bottom of the retainer on the body 8a. If the end portion of the pillar covering part 8b is folded in a direction opposite to the folding direction of Fig. 5(B) (to the rear face of the drawing), the bellows-folded part would have been already arranged with the front face up in Fig. 5(C); in this case, the airbag 8 may be twisted toward the bottom of the retainer on the body 8a so that the bellows-folded part is sandwiched. This is the same as when the number of times of the bellows-folding is even numbered. In such a manner, by twisting each folded pillar covering part 8b to rotate it in the protruding direction, a restorative force can be generated for restoring the twisted part during the inflating and developing of the airbag 8. Using the restorative force, the two bellows-folded pillar covering parts 8b may be simultaneously inflated and developed along the pillars 4 and 4 on both the sides, respectively. A case has been herein described in that the bellows-folded pillar covering part 8b is rotated by 1/2 revolutions (by 180°); alternatively, it may also be rotated by 1/4 revolutions (by 90°) or by one revolution (by 360°). The number of revolutions and the rotational angle may be optionally established in accordance with the kind and the shape of the airbag 8. However, for effectively generating the restorative force of the twisting, it is preferable to be roughly established in a range from 1/4 revolutions (90°) to one revolution (360°), and more preferably, in 1/2 revolutions (180°) in view of the accommodating efficiency of the airbag 8.

According to the folding method for the airbag 8 of the present invention described above, the bellows-folding is adopted to each pillar covering part 8b as well as the twisting is added to the upfolding, so that the folding method satisfying both the improvement in accommodating efficiency of the airbag 8 and the direction control during inflating and developing can be achieved. Although not shown, in the folding process of the pillar covering part shown in Fig. 5(B), instead of the bellows-folding, the inside-folding may be adopted. Also, in the same way as in the folding method of the airbag 1 according to the second embodiment shown in Fig. 3, the upfolding process of Fig. 5(C) and the twisting process of Fig. 5(D) may be counterchanged in order, or they may also be executed substantially simultaneously. In addition, the accommodating method of the airbag 8, although the shape of the airbag 8 and the size of the retainer are different, is basically identical to that of the airbag 1, so that the detailed description is herein omitted.

The present invention is not limited to the embodiments described above, so that a pedestrian airbag for the B pillar and the C pillar may incorporate the present invention, for example. Various airbags arranged within a cabin may also be incorporated to the invention as long as they have projections. Various modifications, such as the projection of the airbag is not limited to that protruded from an end of the body, can be obviously made within the scope of the invention, as defined in the claims.

## Claims

1. An airbag folding method for folding an airbag having a body connected to an inflator for generating gas under a predetermined condition and a projection projected from the body in a predetermined direction, the airbag folding method comprising the steps of:
bellows-folding or inside-folding the projection along a projecting direction;
upfolding the folded projection over the body; and
twisting the upfolded projection by rotating it in the projecting direction.

2. The airbag folding method according to Claim 1, wherein in the twisting step, when the folded projection is upfolded over the body, the folded projection is rotated in the protruding direction so that the surface exposed on the front face is approximated on the body toward the bottom surface of a retainer.

3. The airbag folding method according to Claim 1 or 2, wherein the airbag is a pedestrian airbag configured so that the body is inflated and developed over a hood of a vehicle and the projection is inflated and developed along a pillar of the vehicle.

4. An airbag accommodating method for accommodating an airbag within a predetermined retainer, the airbag having a body connected to an inflator for generating gas under a predetermined condition and a projection projected from the body in a predetermined direction, the airbag accommodating method comprising the steps of:
bellows-folding or inside-folding the projection along a projecting direction;
upfolding the folded projection over the body;
twisting the upfolded projection by rotating it in the projecting direction; and
shaping the folded airbag by upfolding the residual part protruded from the retainer to be accommodated to the shape of an opening of the retainer.

5. The airbag accommodating method according to Claim 4, further comprising the steps of:
attaching a protector cloth in the retainer before folding the airbag; and
wrapping the shaped airbag with the protector cloth.

6. The airbag accommodating method according to Claim 4 or 5, wherein in the twisting step, when the folded projection is upfolded over the body, the folded projection is rotated in the protruding direction so that the surface exposed on the front face is approximated on the body toward the bottom surface of the retainer.

7. The airbag accommodating method according to any one of Claims 4 to 6, wherein the airbag is a pedestrian airbag configured so that the body is inflated and developed over a hood of a vehicle and the projection is inflated and developed along a pillar of the vehicle.

8. An airbag apparatus comprising:
an airbag including an inflator for generating gas under a predetermined condition, a body connected to the inflator, and a projection projected from the body in a predetermined direction; and
a retainer for accommodating the airbag therein,
wherein the projection is bellows-folded or inside-folded along a projecting direction; the folded projection is upfolded over the body; and the upfolded projection is twisted by rotating it in the projecting direction so as to accommodate the twisted airbag within the retainer.

9. The airbag apparatus according to Claim 8, further comprising a protector cloth for wrapping the airbag accommodated in the retainer.

10. The airbag apparatus according to Claim 8 or 9, wherein when the folded projection is upfolded over the body, the projection is twisted by being rotated in the protruding direction so that the surface exposed on the front face is approximated on the body toward the bottom surface of the retainer.

11. The airbag apparatus according to any one of Claims 8 to 10, wherein the airbag is a pedestrian airbag configured so that the body is inflated and developed over a hood of a vehicle and the projection is inflated and developed along a pillar of the vehicle.

## Patentansprüche

1. Airbagfaltverfahren zum Falten eines Airbags mit einem Körper, der mit einem Gasgenerator zum Erzeugen von Gas unter einer vorbestimmten Bedingung verbunden ist, und einem Vorsprung, der sich vom Körper in eine vorbestimmte Richtung erstreckt, wobei das Airbagfaltverfahren die Schritte aufweist:
faltenbalgartig Falten oder nach innen Falten des Vorsprungs entlang einer Erstreckungsrichtung;
Zusammenfalten des gefalteten Vorsprungs über dem Körper; und
Verdrehen des zusammengefalteten Vorsprungs durch Drehung in die Erstreckungsrichtung.

2. Airbagfaltverfahren nach Anspruch 1, wobei im Verdrehungsschritt, wenn der gefaltete Vorsprung über dem Körper zusammengefaltet ist, der gefaltete Vorsprung in die vorstehende Richtung gedreht wird, so dass die an der Frontseite freiliegende Oberfläche dem Körper in Richtung zur Bodenfläche eines Halters angenähert wird.

3. Airbagfaltverfahren nach Anspruch 1 oder 2, wobei der Airbag ein Fußgängerairbag ist, der so ausgebildet ist, dass der Körper über einer Motorhaube eines Fahrzeuges aufgeblasen wird und sich entfaltet und der Vorsprung entlang einer Säule des Fahrzeugs aufgeblasen wird und sich entfaltet.

4. Airbagaufbewahrungsverfahren zum Aufbewahren eines Airbags innerhalb eines vorbestimmten Halters, wobei der Airbag einen Körper, der mit einem Gasgenerator zum Erzeugen von Gas unter einer vorbestimmten Bedingung verbunden ist, und einen Vorsprung aufweist, der sich vom Körper in eine vorbestimmte Richtung erstreckt, mit den Schritten:
faltenbalgartig Falten oder nach innen Falten des Vorsprungs entlang einer Erstreckungsrichtung;
Zusammenfalten des gefalteten Vorsprungs über dem Körper;
Verdrehen des zusammengefalteten Vorsprungs durch Drehung in die Erstreckungsrichtung; und
Ausformen des gefalteten Airbags durch Zusammenfalten des verbleibenden, vom Halter vorstehenden Teils, um diesen an die Form einer Öffnung des Halters anzupassen.

5. Airbagaufbewahrungsverfahren nach Anspruch 4, mit den weiteren Schritten:
Anbringen eines Schutztuches in der Halterung vor dem Falten des Airbags; und
Umwickeln des ausgeformten Airbags mit dem Schutztuch.

6. Airbagaufbewahrungsverfahren nach Anspruch 4 oder 5, wobei im Verdrehungsschritt, wenn der gefaltete Vorsprung über dem Körper zusammengefaltet ist, der gefaltete Vorsprung in die vorstehende Richtung gedreht wird, so dass die an der Frontseite freiliegende Oberfläche dem Körper in Richtung zur Bodenfläche eines Halters angenähert wird.

7. Airbagaufbewahrungsverfahren nach einem der Ansprüche 4 bis 6, wobei der Airbag ein Fußgängerairbag ist, der so ausgebildet ist, dass der Körper über einer Motorhaube eines Fahrzeuges aufgeblasen wird und sich entfaltet und der Vorsprung entlang einer Säule des Fahrzeugs aufgeblasen wird und sich entfaltet.

8. Airbagvorrichtung mit:
einem Airbag mit einem Gasgenerator zum Erzeugen von Gas unter einer vorbestimmten Bedingung, einem Körper, der mit dem Gasgenerator verbunden ist, und einem Vorsprung, der sich vom Körper in eine vorbestimmte Richtung erstreckt; und
einem Halter zum Unterbringen des Airbags darin,
wobei der Vorsprung entlang einer Erstreckungsrichtung faltenbalgartig gefaltet oder nach innen gefaltet ist; der gefaltete Vorsprung über dem Körper zusammengefaltet ist; und der zusammengefaltete Vorsprung durch Drehung in die Erstreckungsrichtung verdreht ist, um den verdrehten Airbag im Halter unterzubringen.

9. Airbagvorrichtung nach Anspruch 8, ferner mit einem Schutztuch zum Umwickeln des im Halter untergebrachten Airbags.

10. Airbagvorrichtung nach Anspruch 8 oder 9, wobei , wenn der gefaltete Vorsprung über den Körper zusammengefaltet ist, der Vorsprung durch Drehung in die vorstehende Richtung verdreht ist, so dass die an der Frontseite freiliegende Oberfläche dem Körper in Richtung zur Bodenfläche des Halters angenähert wird.

11. Airbagvorrichtung nach einem der Ansprüche 8 bis 10, wobei der Airbag ein Fußgängerairbag ist, der so ausgebildet ist, dass der Körper über einer Motorhaube eines Fahrzeuges aufgeblasen wird und sich entfaltet und der Vorsprung entlang einer Säule des Fahrzeugs aufgeblasen wird und sich entfaltet.

## Revendications

1. Procédé de pliage d'airbag, pour le pliage d'un airbag pourvu d'un corps relié à un générateur de gaz destiné à produire un gaz dans un état défini et une partie en saillie s'étendant à partir du corps dans une direction définie, ledit procédé de pliage d'airbag comprenant les étapes suivantes :
pliage en soufflet ou pliage vers l'intérieur de la partie en saillie dans une direction d'extension ;
rabattement sur le corps de la partie en saillie pliée ; et
torsion de la partie en saillie rabattue par rotation de celle-ci dans la direction d'extension.

2. Procédé de pliage d'airbag selon la revendication 1, où lors de l'étape de torsion, lorsque la partie en saillie pliée est rabattue sur le corps, la partie en saillie pliée est tournée dans la direction de saillie de manière à rapprocher la surface exposée sur la face avant de la surface de base d'un dispositif de retenue sur le corps.

3. Procédé de pliage d'airbag selon la revendication 1 ou la revendication 2, où l'airbag est un airbag pour piéton, conçu de telle manière que le corps se gonfle et s'expanse sur un capot d'un véhicule et que la partie en saillie se gonfle et s'expanse le long d'un montant du véhicule.

4. Procédé d'ajustement d'airbag, pour l'ajustement d'un airbag à l'intérieur d'un dispositif de retenue défini, l'airbag étant pourvu d'un corps relié à un générateur de gaz destiné à produire un gaz dans un état défini et d'une partie en saillie s'étendant à partir du corps dans une direction définie, ledit procédé d'ajustement d'airbag comprenant les étapes suivantes :
pliage en soufflet ou pliage vers l'intérieur de la partie en saillie dans une direction d'extension ;
rabattement sur le corps de la partie en saillie pliée ;
torsion de la partie en saillie rabattue par rotation de celle-ci dans la direction d'extension ; et
mise en forme de l'airbag plié par rabattement de la partie restante dépassant du dispositif de retenue, pour ajustement à la forme d'une ouverture du dispositif de retenue.

5. Procédé d'ajustement d'airbag selon la revendication 4, comprenant en outre les étapes suivantes :
fixation d'un tissu protecteur sur le dispositif de retenue préalablement au pliage de l'airbag ; et
enveloppage de l'airbag mis en forme par le tissu protecteur.

6. Procédé d'ajustement d'airbag selon la revendication 4 ou la revendication 5, où lors de l'étape de torsion, lorsque la partie en saillie pliée est rabattue sur le corps, la partie en saillie pliée est tournée dans la direction de saillie de manière à rapprocher la surface exposée sur la face avant de la surface de base du dispositif de retenue sur le corps.

7. Procédé d'ajustement d'airbag selon l'une quelconque des revendications 4 à 6, où l'airbag est un airbag pour piéton, conçu de telle manière que le corps se gonfle et s'expanse sur un capot d'un véhicule et que la partie en saillie se gonfle et s'expanse le long d'un montant du véhicule.

8. Dispositif d'airbag, comprenant :
un airbag pourvu d'un générateur de gaz destiné à produire un gaz dans un état défini, d'un corps relié au générateur de gaz, et d'une partie en saillie s'étendant à partir du corps dans une direction définie ; et
un dispositif de retenue, destiné à recevoir l'airbag,
où la partie en saillie est pliée en soufflet ou pliée vers l'intérieur dans une direction d'extension ; la partie en saillie pliée est rabattue sur le corps ; et la partie en saillie rabattue est soumise à une torsion en étant tournée dans la direction d'extension, de manière à ajuster l'airbag soumis à la torsion à l'intérieur du dispositif de retenue.

9. Dispositif d'airbag selon la revendication 8, comprenant en outre un tissu protecteur pour envelopper l'airbag ajusté dans le dispositif de retenue.

10. Dispositif d'airbag selon la revendication 8 ou la revendication 9, où, lorsque la partie en saillie pliée est rabattue sur le corps, la partie en saillie est soumise à une torsion en étant tournée dans la direction de saillie de manière à rapprocher la surface exposée sur la face avant de la surface de base du dispositif de retenue sur le corps.

11. Dispositif d'airbag selon l'une quelconque des revendications 8 à 10, où l'airbag est un airbag pour piéton, conçu de telle manière que le corps se gonfle et s'expanse sur un capot d'un véhicule et que la partie en saillie se gonfle et s'expanse le long d'un montant du véhicule.
